# EUROPEAN PATENT APPLICATION

(11) **EP 1 168 692 A1**
(43) Date of publication of application: **02.01.2002**
(21) Application number: 01305251.9
(22) Date of filing: 15.06.2001
(51) Int. Cl.: H04H 1/00

(54) **Receiver for receiving digital broadcast data, comprising at least two tuners, capable of providing a merged data output using video and audio data from different broadcast channels**

(30) Priority: 28.06.2000 GB 0015661
(71) Applicant: Pace Micro Technology PLC, Shipley, West Yorkshire BD18 3LF (GB)
(72) Inventor: Matey, Jesus, Leeds, LS4 2SZ (GB)
(74) Representative: Wood, Graham

(57) **Abstract**

A broadcast data receiver includes at least two tuners, each tuner controllable to receive a user selectable data transmission, such as a video and/or audio channel, independently of the other. The user can select to combine the data transmission from the first tuner with the data transmission from the at least second tuner to provide a customised merged data output, using video and audio data from different broadcast channels, said selection made for an event or on a continuous basis.

## Description

The invention to which this application relates is a broadcast data receiver which is provided to allow the reception of digital data. The digital data is broadcast from a remote location, typically by a television programme broadcaster or other service provider and, from the broadcast location, the data is transmitted to a plurality of said broadcast data receivers at a number of different locations. Once transmitted, the digital data can be carried via a number of different type of networks, namely satellite, cable or terrestrial data broadcast systems. However in each case, the broadcast data receiver is provided for use at each premises in conjunction with a means for receiving the data and the broadcast data receiver then undertakes the decoding of the data; processing of the same and the subsequent generation of audio, video and/or auxiliary data, typically via speakers and the display screen which can in one embodiment be combined such that the broadcast data receiver is provided as an integral part of or is connected to a television set.

In due course it is envisaged that the utilisation of broadcast digital data receivers of this type will be commonplace, if not compulsory in that this will be the only manner in which broadcast data representing television programmes will be transmitted to viewers.

Said broadcast data receivers typically include a single tuner whereby, upon a user selection of a channel, a particular frequency is tuned to such that data relating to the selected channel can be obtained by the receiver, decoded, processed and the audio and video generated for that channel.

A first aim of the invention is to provide a means whereby a dual tuner arrangement is provided in a broadcast data receiver and furthermore, an aim is to allow the selective control, independently, of each of said tuners so as to allow selected outputs from said tuners to be combined to provide a customised audio and video output from the broadcast output receiver.

In a first aspect of the invention there is provided a broadcast data receiver, said receiver including at least two tuners, each of said tuners controllable to receive a user selectable data transmission independent of the other and characterised in that the user can select to combine the data transmission from the first tuner with the data transmission from the at least second tuner to provide a customised merged data output.

Preferably the data transmission selected are from two different data providers.

Further preferably the data transmissions relate to the same event.

In a second aspect of the invention there is provided a broadcast data receiver, said receiver including at least two tuners, each of said tuners controllable to receive a user selectable video and/or audio channel, independent of the other and characterised in that the user can select to combine audio or video from a first channel from the first tuner with the other of audio or video from the second channel from the second tuner to provide a customised video and audio output.

In one embodiment, the first tuner is controlled to select a channel which has both audio and video components and the second tuner is controlled to select a second channel which has an audio only output and which audio only output can be overlayed to replace the audio output of the first channel such that the viewer can then watch the video output from the first channel in combination with the audio output from the second channel.

In one embodiment, the combined audio and video output can be generated for display at the particular time of selection or, alternatively, can be combined and transmitted to a storage medium such as a hard disc provided in the broadcast data receiver, VCR or the like. When the video and audio channel are generated from the storage means, it will comprise the video from the first channel and the audio from the second channel.

In one embodiment, one of the tuners can be selected to receive an internet signal and allow combination of the data received from the internet signal with the other tuner output.

In a yet further feature of the invention there is provided an electronic programme guide which is generated from data received by a broadcast data receiver at continuous or regular intervals, said electronic programme guide (EPG) comprising text and other display material which is generated on screen and which text can act both as information for programmes and services which are available to the user and selection means to allow the user to select, typically using the remote control device, programmes to watch and/or other functions relating to the use of the broadcast data receiver, and wherein the EPG facilitates the user selection of independently controllable tuners in the broadcast data receiver to receive data relating to different channels or user selections.

In a yet further embodiment of the invention, a default teletext canbe shown in any channel. For example, if the user likes BBC teletext, if theypress a teletext key it will always return the receiver to the BBC teletext service instead of the teletext service of the channel with the user may be watching at that time. This can be achieved as the teletext service is an independent entity as with the audio and video. This therefore represents another important embodiment of the invention as herein described with use of two separate tuners, one providing the required teletext service.

In one embodiment a user interface can be provided to aid selection of at least two data transmissions and to combine the transmission together. An audio and/or visual indicator can be provided to indicate to the user that there are selectable options available for a particular programme and/or on a particular channel. The indicator can be displayed/sounded when a particular programme starts or when a user switches to a particular channel.

In one embodiment the indicator can be provided on the remote control, on the display screen of the television and/or on a display panel of the broadcast data receiver.

Preferably the visual indicator is an icon which when selected provides a drop down menu with the option of selecting the combination of video, audio, teletext, subtitle and/or the like.

In an alternative embodiment the drop down menu is displayed by selecting one or more buttons on the remote control handset, such as a fast text button.

A specific embodiment of the invention is now described with reference to the accompanying diagrams, wherein
Figure 1 illustrates a first embodiment of the invention in a schematic fashion; and
Figure 2 illustrates a second embodiment of the invention in a schematic fashion.

In accordance with the invention there is provided a broadcast data receiver which is connected to a display means in the form of a television set but which could easily be a separate display screen and speakers. Conventionally, the broadcast data receiver is provided to receive digital data which is broadcast from a remote location via satellite, cable or terrestrial systems. The receiver is controllable by the viewer to receive a particular channel. When a particular channel is selected, a tuner within the broadcast data receiver is set to receive a particular frequency of signal and, on that frequency, the selected channel data will be carried. With the channel identified, the video and audio data is assembled and combined within the broadcast data receiver so as to allow video and audio to be generated via the display screen and speakers.

In the present invention, the broadcast data receiver is provided with at least two tuners and each of the tuners is independently controllable such that one receiver is controlled to receive audio and video for one channel and the second tuner is controlled to receive data for a second channel.

Two specific embodiments of the system are now discussed with reference to the accompanying diagrams.

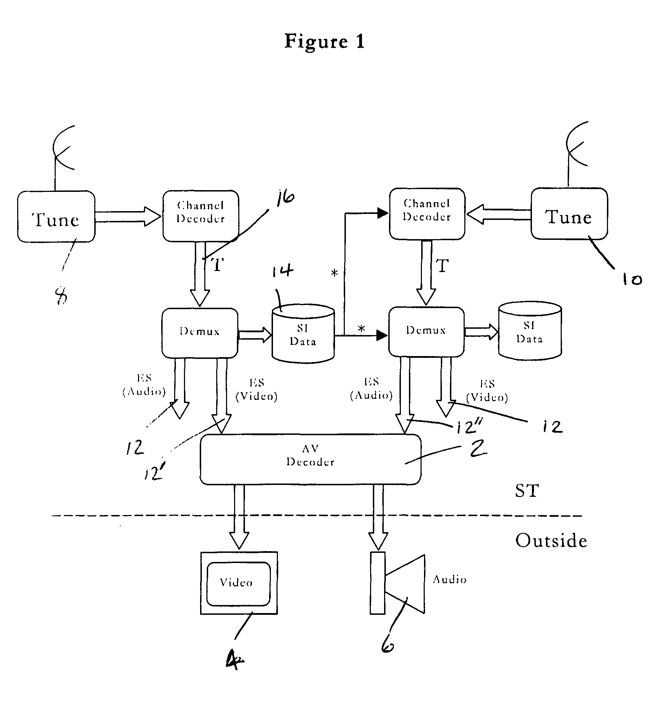

Figure 1 illustrates a first embodiment of the invention in schematic fashion; and

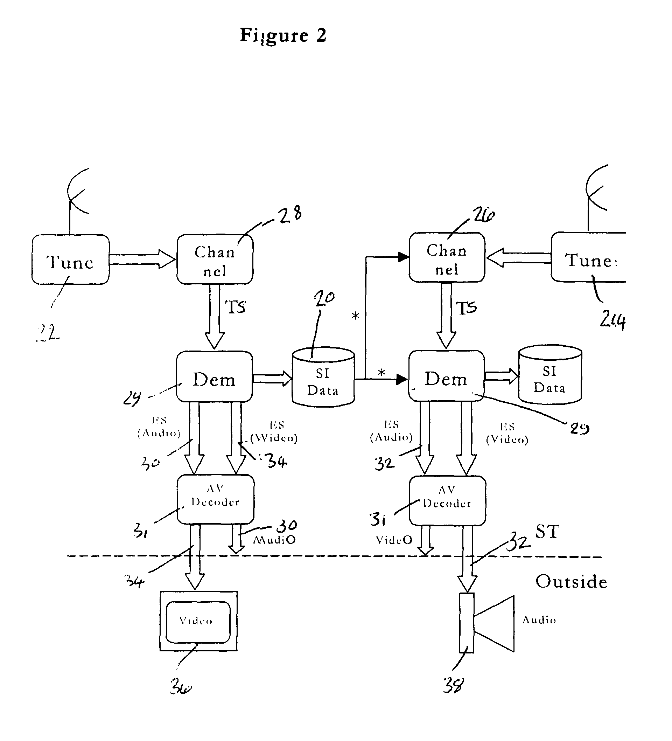

Figure 2 illustrates a second embodiment of the invention in schematic fashion

In the first embodiment of Figure 1 which illustrates the system of one embodiment of a broadcast data receiver connected to a display screen 4 and speakers 6 there is shown an Audio Video(AV) Receiver decoder 2 shared by two tuners 8, 10 and the AV decoder data entries (audio, video, or even teletext, which are called Elementary Streams (ES)) can be selectively chosen from respective tuners in response to a user selection.

In this example, the Service Information (SI) Data of a first Transport Stream (TS), 16 received by tuner 8 carries information (denoted by * in the Figure) about other audio or radio channels available which relate to a specific event such as a football match. This information, and specific software to interpret same, can be used to allow the second tuner 10 to tune to a second channel chosen by the user, typically through interaction with an Electronic Programme Guide (EPG) displayed on the screen of a television set connected to the receiver, in the cases where more than one channel relating to the event is available. In that case, the first tuner 8 can be selected to receive, and the system process, video data for the event from a first channel, and therefore search for and receive the appropriately identified video data 12' transmitted by the broadcaster and the second tuner 10, can be controlled in response to a user selection to receive audio data from another channel for the same event, and the video and audio data used to generate an amalgamated programme for show via a television set 4,6 or equivalent via the AV decoder with the video data 12' going to the display screen 4 and audio data 12" going to the speaker 6.

While the embodiment described above will work it has limitations in that it does not allow other possible operations which could be achieved by using a double tuner receiver such as, recording one program and watching another one. Furthermore, in practice the Demultiplexer (Demux) 29 and the Audio Video Decoder (AV Decoder) 31 are usually provided for use in a single integrated circuit so that two separate circuits can be used as indicated in the embodiment of Figure 2.

In this second embodiment, as described with reference to Figure 2, audio and video can be selectively chosen at the output of each of two AV Decoders 31. There are more than one video and audio outputs and it is the software in the receiver which is used to select the video and audio to be sent to the viewer, in response to user selections.

In this example, the SI Data 20 of the first Transport Stream (TS) from a first tuner 22 carries information, denoted by * in the Figure 2, about the other radio or audio channels which are available and which relate to an event. This information and specific software allow the second tuner 24 to tune to the channel 26 chosen by the user in the case that there is more than one channel available to be selected, with the first tuner 22 tuned to a first channel 28.

This embodiment, in addition to being suited for the purposes of this invention, also allows other possible operations using a double tuner receiver to be achieved.

Thus in accordance with the invention, in one example of use, if a viewer wishes to watch a particular football match then they will select the channel 28 which is carrying the video and typically audio data for the football. However, in many instances, the viewer may not particularly like the commentator or commentary style on the channel or may prefer another commentator and, in accordance with the present invention, they will be able to control the second tuner 24 to select, for example, an audio only channel 26 on which a radio programme is carried with commentary on the particular football match. Thus, the broadcast data receiver can then strip away the audio stream 30 from the first channel and use the audio stream 32 from the second channel 26 so that the viewer is then provided with a facility to combine the audio data 32 from the second channel 26 with the video data 34 from the first channel 28 to provide a customised video and audio channel which meets their preferences. It is envisaged that the same can also be carried out with regard to storage of the customised channel on a storage means for subsequent viewing and listening. It should be appreciated that while the video 36 and audio 38 displays are indicated separately in the diagram, the same will typically be incorporated as part of a television set, as may the broadcast data receiver and the components therein.

A user interface is provided to allow the selection and combination of the audio and video transmissions. The selection and combination of different transmissions can be performed by the user using the remote control handset or a visual and/or audio indicator can be provided.

The visual indicator is typically an icon which is displayed on the display screen of the television set. The icon is displayed when the options for data transmission combination are available and can be shown when a programme has started or at a pre-determined period before or when a user switches to channel when the option is available.

Selection of the visual indicator provides a drop down menu of options such as audio, video, teletext subtitles and/or the like. For example, if video is selected, an angle of view of the football match can be watched, and further selectable options can be provided such as default, left angle, right angle, front angle and/or the like. If audio is selected, further selectable options such as the name of radio channels, or the language of transmission can be provided. If teletext or subtitles are selected, further selectable options may include on/off, the language of text and/or the like.

The broadcaster typically determines whether the option of combining a particular data transmission with one or more other data transmissions is available for a particular channel or programme and the user interface options can be adjusted accordingly.

The user selectable options for data combination can be provided in an electronic programme guide display (EPG) and the combination can be made by the user in the EPG display.

The indicator can also be displayed on a display panel of the broadcast data receiver or on a display panel of the remote control handset.

It is also envisaged that one of the two tuners can be controlled to receive internet data and be used in the same manner as described above. Furthermore, one of the tuners can be used to receive incoming data and the second tuner can be used to generate outgoing data.

In a further feature of the invention there is provided the use of an EPG to allow the user to select the choice of language for the audio content and in this case the event may be part of a television programme, a programme, or may be a continuous selection made by the user so that a particular language is always chosen from the data transmitted. A series of "icons" may be displayed on screen which can be viewed for a few seconds allowing the viewer to make the user selections of video and/or audio channels to receive via the two tuners.

It is envisaged that in order for the system to operate in one embodiment the broadcaster provides hardware at the head end or broadcast location in the form of a second transport steam generator which will allow the second transport stream to be generated and the audio selected from the second transport stream. The service information (SI) generated by the broadcaster may also be modified to allow the broadcast data receiver to locate, via the second tuner, the additional selected commentary which can be controlled by the viewer via an EPG display or other form of onscreen display.

## Claims

1. A broadcast data receiver, said broadcast data receiver including at least two tuners, each of said tuners controllable to receive a user selectable data transmission independent of the other and **characterised in that** the user can select to combine the data transmission from the first tuner with the data transmission from the at least second tuner to provide a customised merged data output.

2. A broadcast data receiver according to claim 1 **characterised in that** the data transmissions selected are from at least two different data providers.

3. A broadcast data receiver according to claim 1 or claim 2 **characterised in that** the data transmissions selected relate to the same event.

4. A broadcast data receiver according to claim 1 **characterised in that** one of the data transmissions is data relating to an audio channel and the at least other data transmission is data relating to a video channel.

5. A broadcast data receiver according to claim 4 **characterised in that** the first tuner is controlled to select a channel which has both audio and video components and the second tuner is controlled to select a second channel which has an audio only output, and which audio output can be overlayed to replace the audio output of the first channel, such that a viewer can watch the video output from the first channel in combination with the audio output from the second channel.

6. A broadcast data receiver according to claim 1 **characterised in that** the two data transmissions can be merged for output at the time of selection.

7. A broadcast data receiver according to claim 1 **characterised in that** the two data transmission can be merged and transmitted to a storage medium/memory in or communicating with the broadcast data receiver.

8. A broadcast data receiver according to claim 7 **characterised in that** the storage medium can include a hard disk of the receiver, a video cassette recorder and/or the like.

9. A broadcast data receiver according to claim 1 **characterised in that** one of the tuners can be selected to receive a data transmission in the form of an internet signal and the data received via the internet signal can be combined with the data transmission from the other tuner.

10. A broadcast data receiver according to claim 1 **characterised in that** the user selectable data transmission are selected from an electronic programme guide comprising text and other matter generated by the broadcast data receiver and relating to programme, data and/or service information.

11. A broadcast data receiver according to claim 1 **characterised in that** one of the data transmissions includes a default teletext service relating to a particular channel, and the other data transmission relates to a different channel, such that the default teletext service can be merged with a different channel irrespective of whether there is already a teletext service available for that different channel.

12. A broadcast data receiver according to claim 1 **characterised in that** an audio video receiver decoder is shared in both tuners and the elementary streams, such as audio, video and/or teletext, of the data transmission can be selectively chosen by the user.

13. A broadcast data receiver, said broadcast data receiver including at least two tuners, each of said tuners controllable to receive a user selectable video and/or audio channel, independent of the other and **characterised in that** the user can select to combine audio or video from a first channel from the first tuner with the other of audio or video from the second channel from the second tuner to provide a customised video and audio output.

14. An electronic programme guide generated from data received from a broadcast data receiver at continuous or regular intervals, said electronic programme guide (EPG) comprising text and other display material which is generated on screen and which text can act both as information for programmes and services which are available to the user and selection means to allow a user to select, typically using a remote control device, programmes to watch and/or other functions relating to the use of the broadcast data receiver, **characterised in that** the EPG facilitates the user selection of independently controllable tuners in the broadcast data receiver to allow merging of data transmissions relating to different channels or user selections.
